# EUROPEAN PATENT APPLICATION

(11) **EP 0 814 609 A2**
(43) Date of publication of application: **29.12.1997**
(21) Application number: 97401432.6
(22) Date of filing: 20.06.1997
(51) Int. Cl.: H04N 5/775

(54) **Method of configuring a communication system**

(30) Priority: 20.06.1996 JP 180023/96
(71) Applicant: SONY CORPORATION, Tokyo (JP)
(72) Inventor: Sato, Masahiko, Shinagawa-ku, Tokyo (JP)
(74) Representative: Thévenet, Jean-Bruno

(57) **Abstract**

In a system having many apparatus connected with AV link (5,6), e.g. using SCART connectors (1-4), automation of configuration can be realized. A transmission side apparatus varies a signal which is sent to pin-8 with interpolation of a certain time period from a signal which is sent to pin-10. The signal of pin-8 is different from the signal of pin-10 in that the signal is insulated between connectors in an apparatus and operates independently for each connection. Therefore the receiving side apparatus can identify the physical position of the transmission side apparatus with reference to pin-8 signal and can discriminate the type of the transmission side apparatus with reference to pin-10 signal.

## Description

### BACKGROUND OF THE INVENTION

### Field of the Invention

This invention relates to a bus system which utilizes, for example, AV (audio/video) link, and more particularly relates to a method for configuration of a system.

### Description of Related Art

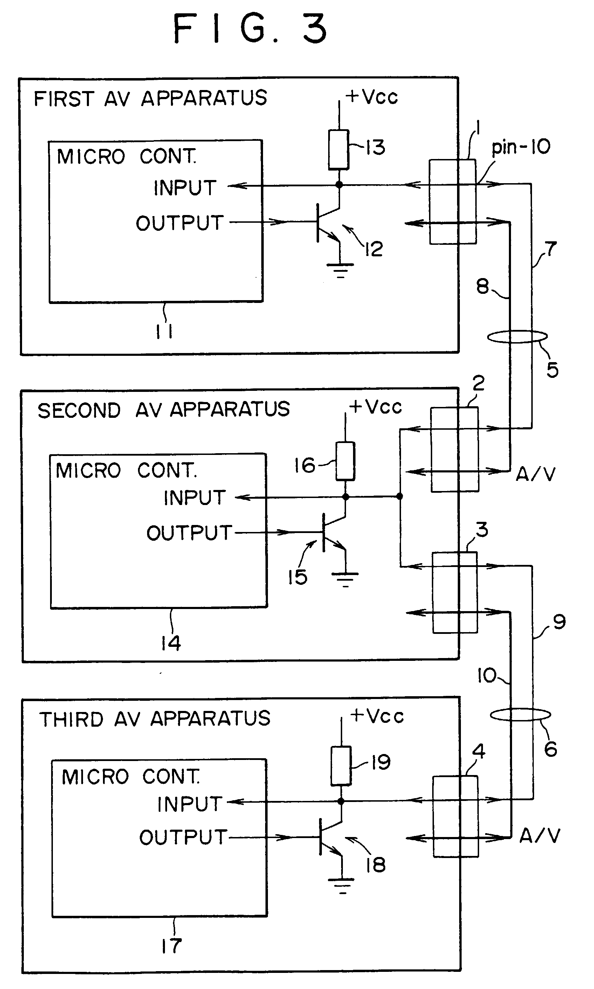

An AV link is a system bus for connecting between AV apparatus using a 10-th pin (pin-10) of a SCART connector specified in EN50049. AV apparatus connect with a single SCART cable using this system bus to enable two-way communication of audio signals, video signals, and control signals. Fig. 3 shows an example of such communication system.

This system comprises first to third AV apparatus. These AV apparatus are typically video tape recorders (refer to as VTR) hereinafter), television receivers (refer to as TV hereinafter), or camcorders.

The first AV apparatus is provided with a SCART connector 1, the second AV apparatus is provided with SCART connectors 2 and 3, and the third AV apparatus is provided with a SCART connector 4. SCART cables 5 and 6 are connected between the SCART connector 1 and SCART connector 2 and between the SCART connector 3 and SCART connector 4 respectively.

In the SCART cable 5, there is a control signal wire 7 for connecting between 10-th pins of the respective SCART connector 1 and SCART connector 2, and an information signal wire 8 for transmitting respectively audio signals and video signals between the SCART connector 1 and SCART connector 2. Similarly, in the SCART cable 6, there is a control signal wire 9 for connecting between 10-th pins of the respective SCART connector 3 and SCART connector 4, and an information signal wire 10 for transmitting respectively audio signals and video signals between the SCART connector 3 and SCART connector 4.

The first AV apparatus is provided with a micro-controller 11 for input-output of the above-mentioned control signal. An input terminal of the micro-controller 11 is connected to the 10-th pin of the SCART connector 1. The two-way arrow marked across the 10-th pin means that this control signal line 7 is a two-way bus line.

A power source voltage +Vcc is supplied to the input terminal of the micro-controller 11 through a resistor 13. A base of an output transistor 12 is connected to an output terminal of the micro-controller 11, and a collector of the output transistor 12 is connected to a terminal of the resistor 13 positioned opposite to the terminal where the power voltage +Vcc is connected. In other words, the output terminal of the micro-controller 11 is connected to the bus line by way of open collector.

Similarly for the second AV apparatus and the third AV apparatus, input-output terminals of respective microcontrollers 14 and 17 are connected to 10-th pins of the SCART connectors 2, 3, and 4 and connected to power source voltage +Vcc in the same manner as used for the first AV apparatus. In other words, the control signal wires of the first to third AV apparatus are connected in series by way of wired or (OR).

Input-output of the control signal is described above. Actually, a block for processing audio signals and video signals is provided respectively to the first to third apparatus though the block is omitted from the drawing because the present invention relates to the transmission of the control signal. Two-way arrows marked on the connection between the SCART connectors 1 and 2 and the information signal wire 8 and two-way arrows marked on the connection between the SCART connectors 3 and 4 and the information signal wire 10 means that these information signal wires 8 and 10 can two-way transmit AV signals.

As described above, the connection between the first AV apparatus, second apparatus, and third apparatus with a single SCART cable enables the audio signal, video signal, and control signal to be two-way transmitted between these apparatus.

For a system comprising three or more apparatus connected with a bus as shown in Fig. 3, configuration is required to control integratedly the system, that is, setting of connection between SCART connectors and apparatus is required.

However, because the control signal wires are connected by way of wired-OR with AV link as described above, an apparatus which is receiving a control signal cannot identify the physical position of the apparatus which is transmitting the control signal. For example, in the case of the second AV apparatus shown in Fig. 3, there is no way to identify whether a control signal supplied to the micro-controller 14 comes through the connector 2 or connector 3. Therefore, a system which utilizes AV link cannot realize automation of the configuration.

The present invention has been accomplished in view of such problem, and provides a method, in a system comprising many apparatus connected with AV link, for enabling each apparatus to identify a connector through which the control signal comes to the apparatus.

### SUMMARY OF THE INVENTION

To solve the above-mentioned problem, the present invention provides a method for configuration of a communication system provided with a plurality of apparatus, first signal wires wired-OR connecting between the respective apparatus, and second signal wires each of which connects independently two apparatus of the plurality of apparatus, the method being characterized in that a transmission side apparatus varies a second signal which is sent to the second signal wire with interpolation of a certain time period from a first signal which is sent to the first signal wire, and a receiving side apparatus identifies the physical position of the transmission side apparatus with reference to the second signal.

According to the present invention, a transmission side apparatus varies a second signal which is sent to the second signal wire with interpolation of a certain time period from a first signal which is sent to the first signal wire, and a receiving side apparatus identifies the physical position of the transmission side apparatus with reference to the second signal.

### BRIEF DESCRIPTION OF THE DRAWINGS

Fig. 1 is a diagram for illustrating a system to which the present invention is applied.

Figs. 2A and 2B are timing charts of out-going signals from the 10-th pin and 8-th pin of each apparatus shown in Fig. 1, for configuration.

Fig. 3 is a diagram for illustrating one example of a system comprising a plurality of AV apparatus connected with AV link.

### DETAILED DESCRIPTION OF PREFERRED EMBODIMENTS

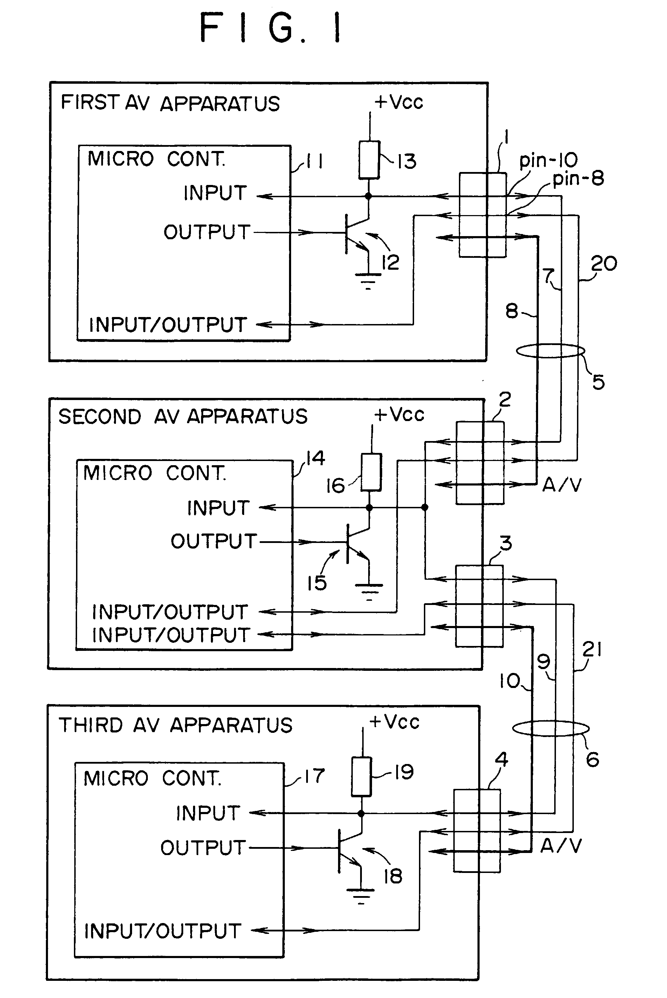

Embodiments of the present invention will be described in detail hereinafter with reference to the drawings. Fig. 1 is a block diagram for illustrating the system structure to which the present invention is applied. The same numbers are given to the same elements or equivalent elements in Fig. 1 as shown in Fig. 3.

As shown in Fig. 1, a control signal wire 20 connects between the 8-th pin (pin-8) of the SCART connector 1 of the first AV apparatus and the 8-th pin (pin-8) of the SCART connector 2 of the second AV apparatus, and a control signal wire 21 connects between the 8-th pin (pin-8) of the SCART connector 3 of the second AV apparatus and the 8-th pin of the SCART connector 4 of the third AV apparatus, in addition to the provision of control signal wires 7 and 9 as in the system shown in Fig. 3.

The inherent definition of the 8-th pin of a SCART connector is AV signal of "active" at high level and AV signal of "not active" at low level. A signal of the 8-th pin is different from a signal of the 10-th pin in that an 8-pin signal is insulated between connectors in an apparatus and operates independently for each connection. For example, in Fig. 1, the second AV apparatus exchanges control signals through the connector 2 between the first AV apparatus, and exchanges control signals through the connector 3 between the third apparatus, characterized in that these exchanges are operated independently. Therefore, the independent operation enables the micro-controller 14 to identify whether the apparatus that transmits a control signal incoming through the 8-th pin is the first AV apparatus or third AV apparatus.

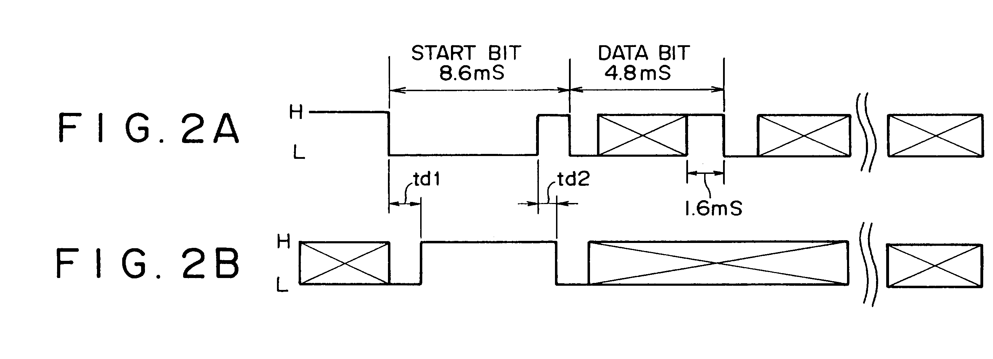

Next, the operation for identification is described referring to Figs. 2A and 2B. Fig. 2A represents a signal which the transmission side apparatus outputs from the 10-th pin for configuration, and Fig. 2B represents a signal which the transmission side apparatus outputs from the 8-th pin for configuration. The time axis is common for Figs. 2A and 2B.

As shown in Fig. 2A, an 8.6 msec start bit and subsequent data bits of 4.8 msec each are outputted from the 10-th pin. The data bit contains the information for indicating the type of this apparatus (VTR, TV). On the other hand, the 8-th pin outputs inherently defined signals, and then the 8-th pin outputs a signal which rises up with a delay of a predetermined period (td1) from the falling edge of the start bit for configuration and tails off itself with a delay of a predetermined period (td2) from the subsequent rising edge of the start bit, thereafter the 8-th pin resumes its function of outputting inherently defined signals.

The apparatus which receives signals shown in Fig. 2A and Fig. 2B determines that a configuration signal is coming from the 8-th pin if the signal incoming from the 8-th pin rises up with a delay of the above-mentioned predetermined period (td1) from the tailing off of the start bit of the signal inputted from the 10-th pin, and the signal incoming from the 8-th pin tails off with a delay of the above-mentioned predetermined period (td2) from the rising up of the start bit.

As described above, because the signal of the 8-th pin is independent for each connection, the apparatus which receives a configuration signal can identify the connection to which the signal belongs. Also the apparatus can identify the connector from which the signal incoming currently from the 10-th pin is supplied. The type of apparatus can be identified by examining the data bit subsequent to the start bit supplied from the 10-th pin. Thereby, for example in Fig. 1, the second AV apparatus can identify the type of the first AV apparatus connected to the connector 2 and the type of the third AV apparatus connected to the connector 4. Therefore, configuration of the overall system can be automated.

In a system in which many apparatus are connected, because each apparatus can identify the type of other apparatus connected directly to this apparatus, the bus master provided in the system inquires of each apparatus successively to which other apparatus the addressed apparatus is connected directly, thereby the connection relation of the whole system can be made clear.

In the above-mentioned embodiment, the predetermined periods (td1) and (td2) are about 1 ms, however, it is only the important thing that a signal of the 8-th pin is varied with an interposition of a certain time period from the variation of a signal of the 10-th pin, therefore the delay time may be, for example, several tens ms. Two or more pairs of pulses may be outputted.

As described above, according to the present invention, each apparatus in a communication system can identify the generator of the signal transmitted from the signal wire connected by way of wired-OR. As a result, automation of the configuration of the whole system can be possible.

## Claims

1. A method of configuration of a communication system provided with a plurality of apparatus, first signal wires (7, 9) wired-OR connecting between said respective apparatus, and second signal wires (20, 21) each of which connects independently two apparatus of said plurality of apparatus, characterized in that a transmission side apparatus varies a second signal which is sent to said second signal wire (20, 21) with interpolation of a certain time period from a first signal which is sent to said first signal wire (7, 9), and a receiving side apparatus identifies the physical position of said transmission side apparatus with reference to said second signal.

2. The method of configuration of a communication system as claimed in claim 1, characterized in that said receiving side apparatus identifies the type of the transmission side apparatus with reference to said first signal.

3. The method of configuration of a communication system as claimed in claim 1 or 2, characterized in that said first signal wire (7, 9) is a signal wire connected to the lO-th pin of a SCART connector (1-4), and said second signal wire (20, 21) is a signal wire connected to the 8-th pin of said SCART connector.

4. The method of configuration of a communication system as claimed in claim 1, 2 or 3, characterized in that said second signal is varied with interposition of a certain time period from the start bit of said first signal.
